Europäisches Patentamt

European Patent Office

Office européen des brevets

(19)

(11) **EP 0 980 034 B1**

(12) **FASCICULE DE BREVET EUROPEEN**

(45) Date de publication et mention
de la délivrance du brevet:
**30.06.2004 Bulletin 2004/27**

(51) Int Cl.⁷: $G05D\ 23/19$, $F24F\ 11/00$

(21) Numéro de dépôt: **99401818.2**

(22) Date de dépôt: **20.07.1999**

(54) **Système de régulation du chauffage d'un immeuble**

Regelungssystem für die Heizung eines Gebäudes

Building heating control system

(84) Etats contractants désignés:
**CH DE FR GB LI NL SE**

(30) Priorité: **13.08.1998 FR 9810405**

(43) Date de publication de la demande:
**16.02.2000 Bulletin 2000/07**

(73) Titulaire: **CSEM Centre Suisse d'Electronique et
de Microtechnique SA
-Recherche et Développement
2007 Neuchâtel (CH)**

(72) Inventeurs:
• **Krauss, Jens
2000 NEUCHATEL (CH)**
• **Bauer, Manuel
1426 CORCELLES-PRES-CONCISE (CH)**

(74) Mandataire: **Colas, Jean-Pierre
Cabinet JP Colas
37, avenue Franklin D. Roosevelt
75008 Paris (FR)**

(56) Documents cités:
EP-A- 0 688 085          US-A- 4 897 798
US-A- 5 197 666          US-A- 5 479 358

## Description

L'invention concerne un système de régulation du chauffage d'un immeuble ou bâtiment, qui met en oeuvre des réseaux neuronaux pour réaliser des fonctions prédictives et des fonctions d'apprentissage pour le comportement de l'immeuble, la météorologie et/ou le confort des usagers.

Les installations actuellement en service pour le chauffage d'immeubles, notamment à usage d'habitation, par circulation d'un fluide caloporteur, comportent un certain nombre d'équipements nécessaires pour l'apport d'énergie au fluide caloporteur et la circulation de ce fluide dans l'immeuble et un certain nombre de capteurs pour mesurer les grandeurs physiques qui permettent d'assurer la régulation en température de l'immeuble.

Une telle installation de chauffage comprend principalement :

- une chaudière pour chauffer le fluide caloporteur au moyen d'une source d'énergie, la température du fluide étant régulée ;
- des échangeurs de chaleur ou radiateurs ; et
- des canalisations de circulation du fluide caloporteur pour connecter la chaudière aux radiateurs et comprenant un circuit de départ, muni d'une pompe pour l'alimentation des radiateurs, et un circuit de retour du fluide qui aboutit, d'une part, à la chaudière et, d'autre part, au circuit de départ par l'intermédiaire d'une vanne de mixage, située en amont de la pompe et qui permet de faire varier la proportion de fluide chaud venant de la chaudière et de fluide réputé moins chaud venant en retour des radiateurs.

La température du fluide délivré par la chaudière étant régulée à une valeur généralement constante, la conduite de l'installation est effectuée en spécifiant la température du fluide d'alimentation des radiateurs au moyen d'une boucle de régulation dont l'actionneur est la vanne de mixage qui, mélangeant les deux sources dans des proportions variables, va faire évoluer la température d'alimentation des radiateurs pour la rendre égale à une température de consigne.

En général, des capteurs sont installés pour mesurer la température du fluide alimentant les radiateurs, dite aussi température d'entrée, la température du fluide au retour, et la température extérieure de l'immeuble et, éventuellement, la température des pièces chauffées, dite température ambiante ou d'intérieur. Les valeurs mesurées servent à déterminer par l'intermédiaire d'un dispositif de régulation la température théorique d'entrée, dénommée habituellement "température de consigne" et, par suite, la position de la vanne de mixage.

Cependant, la procédure de réglage de telles installations est délicate car elle consiste à déterminer les besoins de l'immeuble en apport de chaleur en réponse aux données des différents capteurs. Cette procédure, coûteuse en soi, est effectuée sur la base d'abaques qui ne représentent qu'imparfaitement le comportement réel de l'immeuble à réguler. Par ailleurs, réagissant à une situation donnée, ces systèmes de réglage sont, en général, incapables de tenir compte des échanges thermiques changeants entre l'intérieur et l'extérieur de l'immeuble (par exemple, dus à la présence ou l'absence de soleil), du confort des occupants et, surtout, de leur évolution dans le temps. Enfin, les méthodes de régulation basées sur un asservissement de la température d'entrée à une température de consigne s'avèrent peu optimales du point de vue de la consommation d'énergie.

Un but de la présente invention est donc de réaliser un système de régulation du chauffage d'un immeuble visant à pallier les inconvénients mentionnés ci-dessus.

Un autre but de l'invention est un système de régulation du chauffage d'un immeuble qui tienne compte de l'environnement extérieur, du comportement thermique de l'immeuble et/ou du confort des usagers.

Encore un autre but de l'invention est un système de régulation qui tienne compte de l'évolution future prévisible de l'environnement intérieur et/ou extérieur de l'immeuble.

Encore un autre but de l'invention est un système de régulation qui optimise la consommation d'énergie ainsi que le confort des usagers.

Le système selon l'invention apporte une solution aux problèmes ci-dessus mentionnés et il est conçu pour équiper des installations existantes. C'est ainsi que, dans le cas d'une installation de chauffage telle que décrite ci-dessus, il utilise les informations des capteurs existants en conservant la boucle de régulation de température du fluide en entrée, mais en lui délivrant une valeur de consigne plus élaborée à partir des réactions des usagers, de fonctions prédictives et des facultés d'apprentissage.

L'avantage du système selon l'invention est notamment de pouvoir se connecter à une installation existante en n'exigeant que le minimum de modifications.

Le système de l'invention comprend des moyens de prédiction climatique capables de délivrer des informations relatives à l'évolution des conditions externes, des moyens de prédiction de la température intérieure de l'immeuble, des moyens d'élaboration d'une information de confort des usagers de l'immeuble, des moyens de calcul de la puissance optimale de chauffage et un circuit de génération d'une température de consigne utilisable par des systèmes conventionnels de régulation de chauffage.

Selon une caractéristique de l'invention, les moyens de prédiction ont une capacité d'apprentissage.

Selon une autre caractéristique de l'invention, les moyens de prédiction de température intérieure constituent un modèle de comportement thermique de l'immeuble, modèle qui est susceptible d'être adapté en fonction des valeurs réelles et de prédiction du système.

Ainsi le modèle représentant le comportement thermique de l'immeuble est évolutif et présente l'avantage de ne nécessiter qu'un minimum de réglages manuels, tant à la mise en place que pendant la maintenance. De plus il permet d'anticiper les conditions futures.

Selon encore une autre caractéristique de l'invention, le système donne à l'utilisateur la possibilité d'exprimer une demande de confort "plus chaud" ou "plus froid", qui est complétée par une information potentielle de présence.

Selon une caractéristique de l'invention, ces informations de confort sont considérées par le système à la fois comme des commandes immédiates et comme des informations d'apprentissage lui permettant de s'adapter, et notamment, compte tenu du caractère répétitif des interventions à des heures régulières, d'élaborer par exemple un profil sur 24 heures des températures intérieures opportunes.

Enfin le système assure la conduite de l'installation en spécifiant la température de consigne en entrée compte tenu de la température réelle en entrée, et de l'adéquation entre température intérieure prédite et température intérieure souhaitée. Il délivre le signal correspondant à la boucle de régulation de l'installation préexistante.

L'invention concerne donc un système de régulation de température dans une installation de chauffage d'un immeuble au moyen d'un fluide caloporteur chauffé par une chaudière, comprenant un circuit de fluide d'entrée équipé d'une pompe de circulation, des radiateurs, un circuit de retour du fluide, une vanne de mixage mélangeant le fluide de retour et le fluide venant de la chaudière pour alimenter le circuit de fluide d'entrée et un dispositif de commande de la vanne de mixage agissant de manière à asservir la température du fluide d'entrée à une température de consigne, caractérisé en ce qu'il comprend :

- des premiers moyens de prédiction climatique délivrant des informations relatives aux prévisions des conditions externes sur un nombre donné de périodes élémentaires futures,
- des deuxièmes moyens de prédiction de la température intérieure de l'immeuble à partir des informations délivrées par les premiers moyens de prédiction climatique,
- des troisièmes moyens d'élaboration d'une information de confort des usagers de l'immeuble,
- des quatrièmes moyens de calcul de la puissance optimale de chauffage à partir des informations fournies par lesdits deuxièmes et troisièmes moyens, et
- un circuit de génération de ladite température de consigne à partir de ladite puissance optimale de chauffage et de la température dudit fluide de retour.

D'autres caractéristiques et avantages de l'invention apparaîtront avec la description d'un mode de réalisation, celle-ci étant effectuée en se référant aux dessins ci-annexés dans lesquels :

- la figure 1 est un schéma d'une installation de chauffage conventionnelle ;
- la figure 2 est un schéma du réseau d'information du système de régulation selon l'invention ;
- la figure 3 présente un exemple de tableau de commande à l'usage des usagers.

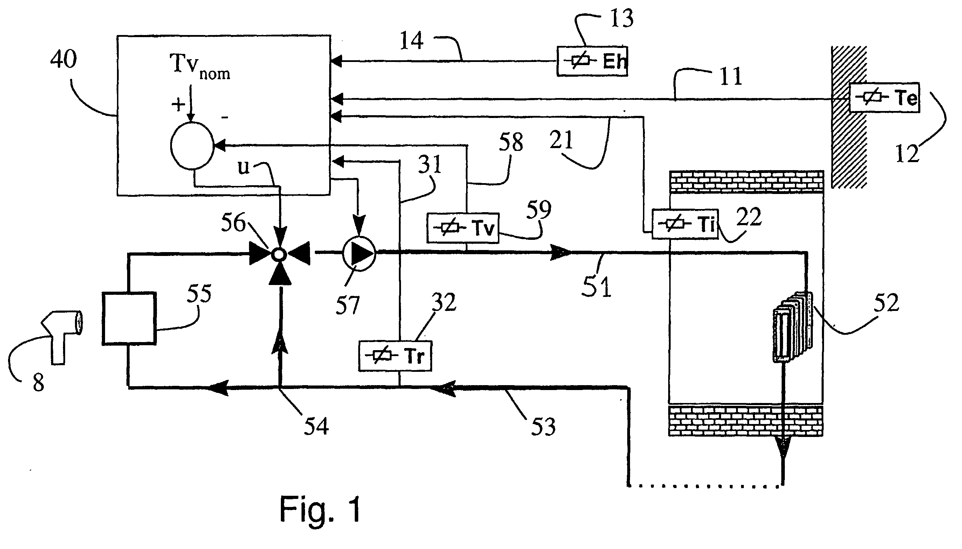

La figure 1 montre schématiquement une installation conventionnelle de régulation du chauffage d'un immeuble. Le réseau de fluide caloporteur, ici de l'eau, est représenté en traits épais et le réseau d'information en traits minces. Un circuit d'entrée 51 alimente en eau chaude les radiateurs 52 et un circuit 53 de retour transporte l'eau réputée moins chaude via une bifurcation 54 à la fois vers la chaudière 55 et vers une vanne de mixage 56, laquelle alimente l'entrée de la pompe 57 par un mélange dosé de fluide chaud provenant de la chaudière 55 et du fluide de retour passant par la bifurcation 54. Le dosage est un élément de la boucle de régulation comprenant un bloc de contrôle 40, lequel prend en compte l'information de température 58 du fluide d'entrée, donnée par le capteur 59, l'information de température ambiante 21, donnée par le capteur 22, une information de température du circuit de retour 31 donnée par le capteur 32 et une information de température extérieure 11 fournie par le capteur 12. Le bloc de contrôle 40 délivre, sur la base des informations reçues et d'une série de paramètres prédéfinis, les signaux de commande de la vanne de mixage 56 et de la pompe 57. Dans certaines installations figure également un capteur d'ensoleillement 13 délivrant une information 14 au bloc 40. Le système de régulation peut être complété par une boucle de régulation (non représentée) de la température de l'eau de la chaudière 55 par action sur la source d'énergie 8. Concernant le bloc de contrôle, on précisera qu'à partir de l'information de température d'entrée 58 et d'une température de consigne $Tv_{nom}$, il délivre un signal de commande u de la vanne de mélange 57. La température de consigne $Tv_{nom}$ est élaborée à partir de toutes les informations reçues par le bloc de contrôle 40.

Comme indiqué précédemment, le réglage d'une installation conventionnelle de chauffage d'un immeuble requiert la fixation d'un nombre important de paramètres (par exemple 80) pour satisfaire au mieux aux conditions particulières dudit immeuble, telles que situation, comportement, etc. Cette fixation des paramètres, qui est faite selon une méthode empirique, demande beaucoup de temps d'un opérateur qualifié, ne tient pas compte d'éléments changeants (tel que l'ensoleillement ou la présence des usagers) et, surtout, ne présente ni caractère prédictif, ni une réelle optimisation. De plus, les systèmes conventionnels cherchent le plus souvent à asservir une température ambiante à une valeur de consigne sans tenir compte du bilan énergétique de l'ensemble de l'installation. A l'inverse, le système selon l'invention ne nécessite la fixation que d'un nombre réduit de paramètres (grâce à ses propriétés d'apprentissage), est capable d'anticiper les conditions futures, prend en compte les modifications d'environnement (ensoleillement, comportement des usagers) et optimise la puissance nécessaire de chauffage.

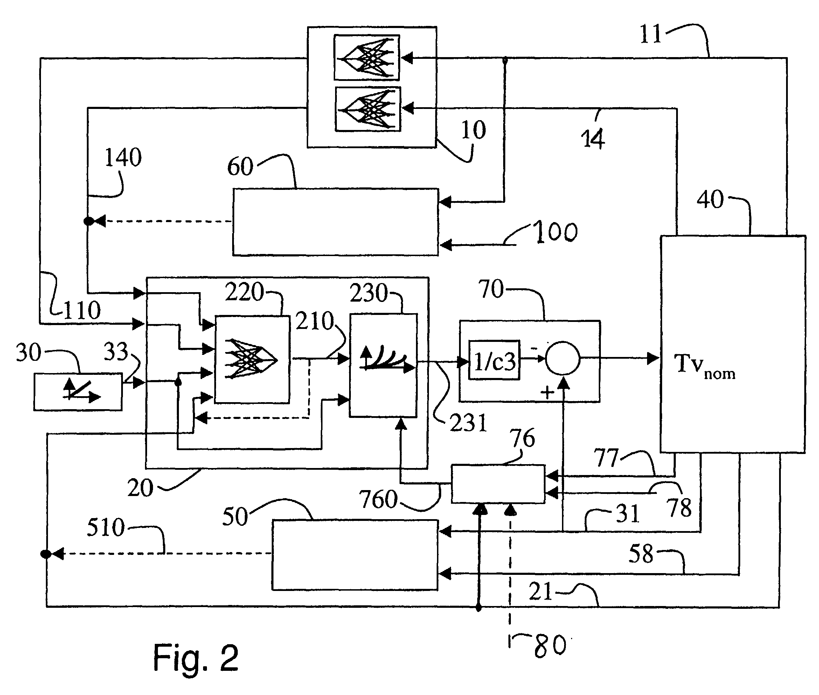

Le système représenté figure 2 est un exemple de réalisation selon l'invention. Il opère à partir des informations disponibles dans la plupart des installations de réglage conventionnelles, telles que : une information de température extérieure 11, une information relative à l'ensoleillement 14, des informations 77 données par l'utilisateur, une information de température de retour 31, une information de température 58 et une information de température ambiante 21. Le système de l'invention est prévu pour élaborer la valeur de température d'entrée nominale Tv$_{nom}$ à fournir au système de régulation conventionnel 40. Ce système comprend deux réseaux neuronaux 10 et 220 possédant des capacités d'apprentissage, un bloc d'adaptation 76 recevant des informations de confort en provenance de l'usager, un bloc 30 d'élaboration du vecteur de puissance de chauffage, un bloc 230 de calcul de la puissance optimale de chauffage, un bloc 50 d'estimation de la température ambiante et un bloc 70 de détermination de la valeur de température d'entrée nominale, ou température de consigne.

Le système de l'invention intègre les trois fonctions prédictives suivantes :

-   évolution climatique ;
-   comportement du bâtiment et
-   comportement de l'utilisateur.

La première fonction est réalisée à l'aide du réseau neuronal 10 qui reçoit les informations actuelles relatives à la température extérieure, d'une part, et à l'ensoleillement, d'autre part, et qui élabore deux vecteurs dont les composantes (en nombre k) représentent les valeurs prévues pour chacune des k = 6 heures à venir pour, respectivement, la température extérieure et l'ensoleillement. Les composantes des deux vecteurs sont recalculées tous les 1/4 d'heure. Par réseau neuronal, on entend un système capable d'effectuer une combinaison linéaire des valeurs d'entrée ; chacune desdites valeurs d'entrée étant affectée d'un coefficient de pondération susceptible d'être corrigé par des moyens d'ajustement en fonction de la valeur prédite et de la valeur réelle. De cette manière, il est possible d'affiner les prédictions pour qu'elles présentent un minimum d'écart avec les valeurs réelles. Ces systèmes ou réseaux neuronaux sont, pour cette raison, appelés systèmes à apprentissage. Les réseaux neuronaux peuvent être réalisés à l'aide de circuits logiques câblés, de programmes d'ordinateur ou de tout autre moyen équivalent.

Les deuxième et troisième fonctions sont réalisées à l'aide d'un bloc de contrôle 20. Ce bloc de contrôle comprend le réseau neuronal 220 qui reçoit en entrée les informations réelles de la température ambiante 21 (ou, optionnellement, la valeur estimée 510 de cette température ambiante fournie par le bloc 50), le vecteur 33 de puissance de chauffage et les vecteurs 110 et 140 des valeurs prévues pour, respectivement, la température extérieure et l'ensoleillement ; ces deux derniers vecteurs étant fournis par le réseau neuronal 10. L'information de sortie de ce réseau 220 est une prédiction de la température intérieure 210 pour la période de temps suivante (par exemple, pour l'heure suivante), qui est fournie à un bloc 230 d'optimisation de la puissance de chauffage ainsi qu'à l'entrée du réseau neuronal 220. Le bloc d'optimisation 230 reçoit, outre l'information de sortie du réseau neuronal 220, le vecteur 33 et l'information de sortie 760 du bloc d'adaptation 76, appelée température de confort. La sortie 231 du bloc d'optimisation 230 représente la valeur de puissance optimale de chauffage P$_{opt}$, qui constitue la grandeur d'entrée du circuit 70. Ce dernier circuit détermine, en fonction de cette valeur P$_{opt}$ et de l'information 31 de température de retour, la valeur de température d'entrée nominale Tv$_{nom}$ à fournir au système de régulation conventionnel 40.

Le fonctionnement du réseau neuronal 220 est analogue à celui du réseau 10 et l'information de sortie représente la valeur de prédiction de la température intérieure pour l'heure suivante. Ce réseau neuronal réalise une combinaison linéaire des valeurs d'entrée à l'aide de coefficients qui sont corrigés par des moyens d'ajustement en fonction des écarts entre la valeur prédite et la valeur réelle.

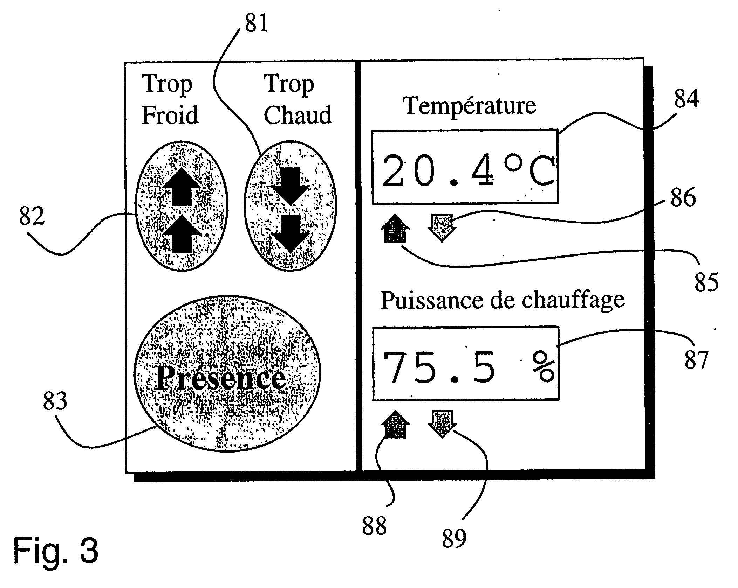

Le bloc d'adaptation 76, reçoit l'information de température intérieure 21, éventuellement, l'information "fenêtre ouverte" 78 et il est de plus connecté à un panneau de commande tel que celui représenté figure 3 qui lui délivre une information 77 de commande de type "plus chaud" ou "plus froid" et qui est à la disposition de l'utilisateur. Ce bloc élabore une température opportune de confort pour la température intérieure, et délivre un signal correspondant 760 au module d'optimisation 230. optionnellement, ce bloc d'adaptation peut recevoir un signal représentatif 80 de la présence ou de l'absence des usagers. Un tel signal peut être élaboré par tout système approprié de détection de présence. La capacité de prendre en compte le comportement des usagers est l'une des caractéristiques essentielles de l'invention.

Le bloc d'optimisation 230 est prévu pour délivrer une valeur de puissance optimale de chauffage P$_{opt}$. Il reçoit les différentes valeurs possibles de puissance de chauffage fournies par le bloc 30 et tient compte de la valeur de prédiction de température intérieure fournie par le bloc 220 et de la température de confort fournie par le circuit 76 et il optimise une fonction de coût, telle que

$$E = c_1.P + c_2.PMV(T_{int}, T_{conf}),$$

pour une période de temps s'étalant sur les six heures futures. Dans la fonction ci-dessus, P est la puissance de chauffage, $c_2$ est un coefficient indicateur de la présence des usagers pouvant prendre la valeur 0 ou 1, $c_1$ est un coefficient de pondération choisi de façon que les deux termes de la fonction E contribuent à cette fonction avec un poids équivalent, $T_{int}$ est la valeur de température ambiante, $T_{conf}$ est la valeur de température de confort et PMV est une fonction appelée "Predicted Mean Vote". Une telle fonction peut être calculée à partir de la formule de Fanger qui prend en compte des informations telles que $T_{int}$ et $T_{conf}$ ou encore le degré d'habillement des usagers. Cette fonction peut, par exemple, varier entre les valeurs -3 (trop froid) et +3 (trop chaud), la valeur 0 correspondant au confort optimal. L'optimisation de cette fonction de coût pour les six heures à venir permet de déduire la valeur optimale $P_{opt}$ de la puissance de chauffage pour le prochain pas ; cette valeur $P_{opt}$ constituant l'information de sortie du bloc 230 qui est fournie au circuit 70. L'optimisation de la puissance de chauffage basée sur les prédictions du comportement du bâtiment, de celui des usagers et de l'évolution des conditions extérieures (température externe, ensoleillement) est une des caractéristiques essentielles de l'invention.

La puissance de chauffage ne constitue pas une information directement utilisable par les systèmes de régulation conventionnels, tel le système 40. Le circuit 70 transforme donc cette valeur $P_{opt}$ en une information de température de consigne $Tv_{nom}$ que le système 40 est capable de prendre en compte, comme indiqué en relation avec la description de la figure 1. Cette valeur $Tv_{nom}$ est reliée à l'information $P_{opt}$ par la relation : $P_{opt} = c_3. (Tv_{nom} - T_r)$, où $T_r$ est la valeur de la température de retour 31 et $c_3$ est un coefficient représentatif de la capacité de l'installation 40 à diffuser de la chaleur.

Sur la figure 2, sont encore représentés des blocs optionnels, à savoir : un bloc 60 de calcul de la prédiction de l'ensoleillement et un bloc 50 d'estimation de la température intérieure. Ces deux blocs peuvent être utilisés lorsque l'installation ne comporte pas de capteur d'ensoleillement ou pas de capteur de température intérieure. La température intérieure peut être estimée à partir des informations de température du fluide d'entrée 58 et de température du fluide de retour 31 en faisant intervenir le débit du circuit de chauffage et l'équation thermique du bâtiment. La prédiction d'ensoleillement peut être estimée à partir d'informations de services météorologiques 100 et de l'information de température extérieure 11. En effet, cette dernière information permet de savoir si la température maximale prévue par les services météorologiques est atteinte ou doit être corrigée pour tenir compte d'éventuels passages nuageux.

La figure 3 représente un panneau de contrôle donné à titre d'exemple. Ce panneau de contrôle comprend deux boutons d'action, "plus chaud" 82, "plus froid" 81, et un détecteur de présence 83. Le panneau présente des visualisations chiffrées et des flèches allumées ou éteintes : la température actuelle 84 de la pièce, une flèche vers le haut 85 indiquant qu'une consigne de montée en température a été donnée, une flèche vers le bas 86 indiquant qu'une consigne de descente de température a été donnée. Une information sur la part exprimée en pourcentage 87 de fluide venant directement de la chaudière que la vanne de mixage laisse passer, donne une image de la consommation instantanée d'énergie et du potentiel disponible. Une flèche vers le haut 88 exprimant qu'une consigne d'augmentation a été enregistrée, et une flèche vers le bas 89 exprimant qu'une consigne de diminution a été prise en compte.

Selon une caractéristique de l'invention, le sens ("plus" ou "moins") mais aussi la fréquence et la répétition à des heures quasi identiques de la journée des interventions de sens ou de présence de l'utilisateur apportent au système de réglage de l'invention une information sur la présence d'usagers et la température de confort souhaitée qui permet à ce système de réglage d'élaborer un profil, par exemple sur 24 heures, de la température intérieure opportune au sens d'un compromis entre le coût de l'énergie et le confort, spécifiant par exemple une diminution la nuit, voire pendant les absences régulièrement répétées chaque jour, et anticipant la commande "plus chaud" que les occupants exercent habituellement à leur retour. Le système a ainsi une capacité d'apprentissage tenant compte des informations passées relatives aux usagers.

Selon une caractéristique de l'invention, le bloc de commande 76 garde en mémoire et filtre les interventions des usagers compte tenu des consignes en cours de réalisation.

## Revendications

1. Système de régulation de température dans une installation de chauffage d'un immeuble au moyen d'un fluide caloporteur chauffé par une chaudière (55), comprenant un circuit de fluide d'entrée équipé d'une pompe (57) de circulation, des radiateurs (52), un circuit de retour (53) du fluide, une vanne de mixage (56) mélangeant le fluide de retour et le fluide venant de la chaudière pour alimenter le circuit de fluide d'entrée et un dispositif de commande (40) de la vanne de mixage (56) agissant de manière à asservir la température du fluide d'entrée à une température de consigne, **caractérisé en ce qu'il**

comprend :

- des premiers moyens (10) de prédiction climatique délivrant des informations relatives aux prévisions des conditions externes sur un nombre donné de périodes élémentaires futures,
- des deuxièmes moyens (220) de prédiction de la température intérieure de l'immeuble à partir des informations délivrées par les premiers moyens (10) de prédiction climatique,
- des troisièmes moyens (76) d'élaboration d'une information de confort des usagers de l'immeuble,
- des quatrièmes moyens (230) de calcul de la puissance optimale de chauffage à partir des informations fournies par lesdits deuxièmes et troisièmes moyens, et
- un circuit de génération (70) de ladite température de consigne à partir de ladite puissance optimale de chauffage et de la température dudit fluide de retour.

2. Système selon la revendication 1, **caractérisé en ce que** lesdits premiers moyens (10) reçoivent une information de température extérieure (11) et une information d'ensoleillement (14) et délivrent k composantes d'un premier vecteur de température extérieure (110) et d'un deuxième vecteur d'ensoleillement (140), lesdites k composantes représentant les prédictions de la température extérieure et de l'ensoleillement, pour les k périodes élémentaires futures.

3. Système selon la revendication 2, **caractérisé en ce que** lesdits premiers moyens (10) comportent un réseau neuronal réalisant une combinaison linéaire des valeurs d'entrée à l'aide de coefficients et des cinquièmes moyens d'ajustement desdits coefficients en fonction des écarts entre les valeurs de prédiction et les valeurs réelles de la température extérieure et de l'ensoleillement.

4. Système selon l'une des revendications 1 à 3, **caractérisé en ce que** lesdits deuxièmes moyens (220) reçoivent en entrée une information de puissance de chauffage (33), lesdites informations relatives aux prévisions des conditions externes (110,140) et l'information de température interne (21) pour les périodes élémentaires antérieure, présente et future et délivre une prédiction de la température interne (210) pour la période élémentaire future.

5. Système selon la revendication 4, **caractérisé en ce que** lesdits deuxièmes moyens (220) comportent un réseau neuronal réalisant une combinaison linéaire des valeurs d'entrée à l'aide de coefficients et des sixièmes moyens d'ajustement desdits coefficients en fonction des écarts entre la valeur de prédiction et la valeur réelle de la température intérieure.

6. Système selon la revendication 4 ou 5, **caractérisé en ce que** ladite information de puissance de chauffage est reçue sous la forme d'un vecteur dont les composantes représentent toutes les valeurs possibles de puissance de chauffage que peut fournir ladite installation de chauffage.

7. Système selon l'une des revendications 1 à 6, **caractérisé en ce que** lesdits troisièmes moyens (76) reçoivent une information de température souhaitée par l'usager (77) et une information de présence de l'usager (80).

8. Système selon la revendication 7, **caractérisé en ce** lesdits troisièmes moyens disposent d'une capacité d'apprentissage en tenant compte des informations passées relatives aux usagers.

9. Système selon l'une des revendications 1 à 8, **caractérisé en ce que** ladite puissance optimale de chauffage est calculée en optimisant, sur une période donnée, une fonction de coût comportant un premier terme représentant une consommation d'énergie et un deuxième terme représentatif de ladite information de confort.

**Patentansprüche**

1. System zum Regeln der Temperatur in einer Heizungsanlage eines Gebäudes mittels eines Wärmeträgerfluids, das von einem Kessel (55) geheizt wird, welches aufweist: einen Vorlaufkreis eines Fluids, der mit einer Umlaufpumpe (57) versehen ist, Radiatoren (52), einen Rücklaufkreis (53) des Fluids, ein Mischventil (56), das das Rücklauffluid und das vom Kessel kommende Fluid mischt, um den Vorlaufkreis zu speisen, und eine Steuervorrichtung (40) für das Mischventil (56), die in der Weise wirkt, dass sie die Vorlauftemperatur des Fluids auf einen Temperatursollwert regelt, **dadurch gekennzeichnet, dass** es aufweist:

- erste Mittel (10) zur Klimavorhersage, die Informationen bezüglich Prognosen der Außenbedingungen über einer gegebenen Anzahl elementarer zukünftiger Perioden liefern,
- zweite Mittel (220) zur Vorhersage der Innentemperatur des Gebäudes ausgehend von Informationen, die von den ersten Mitteln (10) zur Klimavorhersage geliefert werden,
- dritte Mittel (76) zum Erarbeiten einer Information zum Komfort der Benutzer des Gebäudes,
- vierte Mittel (230) zum Berechnen der optimalen Heizleistung ausgehend von den Informationen, die von den zweiten und dritten Mitteln erzeugt werden, und

- eine Schaltung (70) zum Erzeugen der Solltemperatur ausgehend von der optimalen Heizleistung und der Temperatur des Rücklauffluids.

2. System nach Anspruch 1, **dadurch gekennzeichnet, dass** die ersten Mittel (10) eine Information zur Außentemperatur und eine Information zur Sonneneinstrahlung (14) empfangen und k Komponenten eines ersten Vektors der Außentemperatur (110) und eines zweiten Vektors der Sonneneinstrahlung (140) liefern, wobei die k Komponenten die Prognosen zur Außentemperatur und zur Sonneneinstrahlung für die k zukünftigen elementaren Perioden darstellen.

3. System nach Anspruch 2, **dadurch gekennzeichnet, dass** die ersten Mittel (10) ein neuronales Netz, das eine lineare Kombination der Vorlaufwerte mit Hilfe von Koeffizienten realisiert, und fünfte Mittel zum Einstellen der Koeffizienten in Abhängigkeit von den Differenzen zwischen den Prognosewerten und den Ist-Werten der Außentemperatur und der Sonneneinstrahlung aufweisen.

4. System nach einem der Ansprüche 1 bis 3, **dadurch gekennzeichnet, dass** die zweiten Mittel (220) am Eingang eine Information zur Heizleistung (33), die Informationen bezüglich der Prognosen der Außenbedingungen (110, 140) und die Information zur Innentemperatur (21) für die früheren, gegenwärtigen und zukünftigen elementaren Perioden empfangen und eine Vorhersage der Innentemperatur (210) für die zukünftige elementare Periode liefern.

5. System nach Anspruch 4, **dadurch gekennzeichnet, dass** die zweiten Mittel (220) ein neuronales Netz, das eine lineare Kombination der Vorlaufwerte mit Hilfe von Koeffizienten realisiert, und sechste Mittel zum Einstellen der Koeffizienten in Abhängigkeit von den Differenzen zwischen dem Prognosewert und dem Ist-Wert der Innentemperatur aufweisen.

6. System nach Anspruch 4 oder 5, **dadurch gekennzeichnet, dass** die Information zur Heizleistung in Form eines Vektors empfangen wird, dessen Komponenten sämtliche möglichen Werte der Heizleistung, welche die Heizungsanlage liefern kann, darstellen.

7. System nach einem der Ansprüche 1 bis 6, **dadurch gekennzeichnet, dass** die dritten Mittel (76) eine Information zu der vom Benutzer gewünschten Temperatur (77) und eine Information zur Anwesenheit des Benutzers (80) empfangen.

8. System nach Anspruch 7, **dadurch gekennzeichnet, dass** die dritten Mittel über eine Lernfähigkeit unter Berücksichtigung der vergangenen Informationen bezüglich der Benutzer verfügen.

9. System nach einem der Ansprüche 1 bis 8, **dadurch gekennzeichnet, dass** die optimale Heizleistung berechnet wird, indem über einer gegebenen Periode eine Kostenfunktion, die einen einen Energieverbrauch darstellenden ersten Term und einen die Komfortinformation darstellenden zweiten Term aufweist, optimiert wird.

**Claims**

1. A system for controlling the temperature in an installation for heating a building by means of a heat exchange fluid heated by a boiler (55), the system comprising a fluid inlet circuit equipped with a circulation pump (57), radiators (52), a fluid return circuit (53), a mixing valve (56) for mixing the return fluid and fluid coming from the boiler to feed the fluid inlet circuit, and a device (40) for controlling the mixing valve (56) so that the inlet fluid temperature is staved to a set point temperature, and the system being **characterized in that** it comprises:

- weather prediction first means (10) for supplying information relating to outdoor condition forecasts over a given number of future base periods,
- second means (220) for predicting the temperature inside the building on the basis of the information supplied by the weather prediction first means (10),
- third means (76) for generating information on the comfort of users of the building,
- fourth means (230) for calculating an optimum heating power from the information supplied by said second and third means, and
- a circuit (70) for generating said set point temperature from said optimum heating power and the temperature of said return fluid.

2. A system according to claim 1, **characterized in that** said first means (10) receive outdoor temperature information (11 ) and sunshine information (14) and deliver k components of an outdoor temperature first vector (110) and a sunshine second vector (140), said k components representing outdoor temperature and sunshine predictions for the k future base periods.

3. A system according to claim 2, **characterized in that** said first means (10) comprise a neural network for combining input values in a linear manner with the aid of coefficients and fifth means for adjusting said coefficients as a function of differences between predicted and real outdoor temperature and sunshine values.

4. A system according to any one of claims 1 to 3, **characterized in that** said second means (220) receive at their input heating power information (33), said information relating to outdoor condition forecasts (110, 140) and indoor temperature information (21) for past, present and future base periods and supply an indoor temperature prediction (210) for the future base period.

5. A system according to claim 4, **characterized in that** said second means (220) comprise a neural network for combining input values in a linear manner with the aid of coefficients and sixth means for adjusting said coefficients as a function of the differences between the predicted and the real indoor temperature value.

6. A system according to claim 4 or claim 5, **characterized in that** said heating power information is received in the form of a vector whose components represent all possible values of the heating power that said heating installation can supply.

7. A system according to any one of claims 1 to 6, **characterized in that** said third means (76) receive information (77) on a temperature required by the user and information (80) indicating the presence of the user.

8. A system according to claim 7, **characterized in that** said third means have a learning capability taking account of past information relating to users.

9. A system according to any one of claims 1 to 8, **characterized in that** said optimum heating power is calculated by optimizing over a given period a cost function comprising a first term representing energy consumption and a second term representative of said comfort information.

Fig. 1

Fig. 2

EP 0 980 034 B1

Fig. 3